# EUROPEAN PATENT SPECIFICATION

(11) **EP 2 891 512 B1**
(45) Date of publication and mention of the grant of the patent: **08.07.2020**
(21) Application number: 13832001.5
(22) Date of filing: 28.05.2013
(51) Int. Cl.: B01D 29/50, B01D 29/11, B01D 29/66

(54) **REVERSE-WASHING-TYPE FILTRATION DEVICE PROVIDED WITH A FILTER ELEMENT STRUCTURE**
REVERSE-WASHING-FILTERVORRICHTUNG MIT EINER FILTERELEMENTSTRUKTUR
DISPOSITIF DE FILTRATION À LAVAGE À CONTRE-COURANT DOTÉ D'UNE STRUCTURE À ÉLÉMENT FILTRANT

(30) Priority: 28.08.2012 JP 2012187493
(43) Date of publication of application: 08.07.2015
(73) Proprietor: Kanagawa Kiki Kogyo Co., Ltd., Yokohama-shi Kanagawa 235-0021 (JP)
(72) Inventor: YAMADA, Norio, Yokohama-shi Kanagawa 235-0021 (JP); KOI, Kenichi, Yokohama-shi Kanagawa 235-0021 (JP); MATSUO, Takashi, Yokohama-shi Kanagawa 235-0021 (JP); NONAKA, Kazutaka, Yokohama-shi Kanagawa 235-0021 (JP)
(74) Representative: Glawe, Delfs, Moll
(86) International application number: PCT/JP2013/064726
(87) International publication number: WO 2014/034204

(56) References cited:
- EP-A2- 0 245 585
- WO-A1-01/21277
- CH-A- 264 591
- JP-A- H01 184 005
- JP-A- S57 209 616
- JP-A- S63 267 409
- JP-A- 2001 232 113
- JP-U- S5 997 708
- US-A- 3 318 452
- US-A- 3 939 075

## Description

### [Technical Field]

The present invention relates to a backwash type filter provided with a filter element structure, said backwash type filter being defined in claim 1.

### [Background Art]

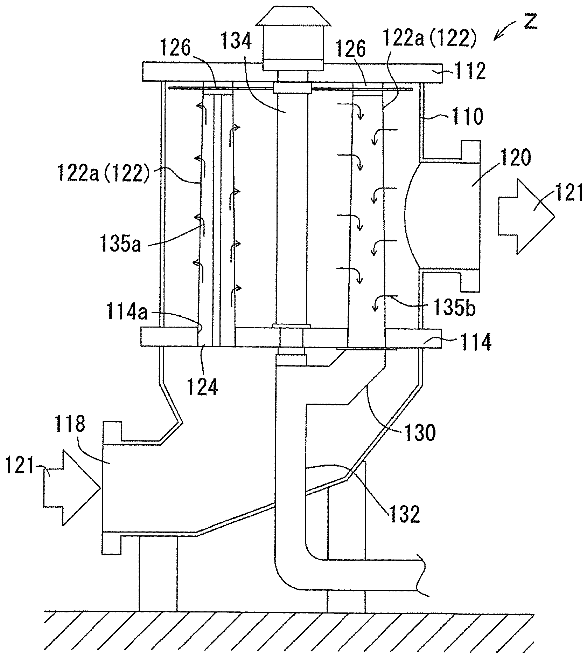

A backwash type filter mounted on a vessel such as a container ship for the use thereon has been proposed. The structure of a backwash type filter in related art is briefly explained herein with reference to FIG. 8.

As illustrated in the figure, a backwash type filter Z includes a cylindrical filter housing (hereinafter abbreviated as "housing") 110 having two sealing covers 112 and 114. The housing 110 has a device inlet port 118 through which filtering target fluid is introduced, and a device outlet port 120 through which filtered fluid is discharged. In addition, a plurality of filter elements 122 are attached to the inside of the housing 110. More specifically, the plural filter elements 122 are disposed within the housing 110 along the circular arc of the cylindrical shape (concentric circle) of the housing 110 while spaced apart from each other.

Each of the filter elements 122 includes a filter medium 122a having a hollow cylindrical shape. One end of the filter medium 122a is inserted into a through hole 114a formed in the sealing cover 114 to engage with the through hole 114a, while the other end of the filter medium 122a is connected with a sealing cap 126 attached to the sealing cover 112 to be sealed by the sealing cap 126. A filter inlet port 124 is opened at one end of the filter element 122. Fluid is introduced into the filter element 122 through the filter inlet port 124, or discharged from the filter element 122 through the filter inlet port 124.

The fluid introduced through the device inlet port 118 is so directed as to enter the inside of the filter medium 122a through the filter inlet port 124 of the filter element 122, and then is filtered in the course of flow from the inside of the filter medium 122a to the outside, and discharged from the device outlet port 120. Arrows 121 in the figure indicate the flow direction of the fluid during operation of the filter.

The backwash type filter Z further includes a drive rod (center rotation shaft) 134, and a backwash arm 130 connected with the drive rod 134. This structure allows sequential cleaning of the filter elements 122 while executing filtering.

The upper end of the backwash arm (backwash pipe) 130 contacts the lower surface of the sealing cover 114, while the lower end of the backwash arm 130 connects with a pipe 132 connected to a fluid outlet port for sewage. The backwash arm 130 is so configured as to be sequentially moved by the drive rod 134 in the space below the filter inlet ports 124 of the filter elements 122. More specifically, the backwash arm 130 acts in accordance with the rotation of the drive rod 134 to sequentially connect with any one of the plural filter elements 122. In this case, only the filter element 122 connected with the backwash arm 130 allows the fluid filtered by the other filter elements 122 to flow from the outside of the filter medium 122a of the filter element 122 connected with the backwash arm 130 to the inside. As a result, the corresponding filter element 122 is backwashed. The backwash direction is indicated by arrows 135b in the figure (direction from the outside of the filter element 122 to the inside), whereas the normal filtering direction is indicated by arrows 135a (direction from the inside of the filter element 122 to the outside). A backwash type filter performing backwashing by a method similar to the method discussed above is disclosed in Patent Literature 1, for example.
From WO 01/21277 A1 a backflushable filtering apparatus is known. The apparatus comprises inlet and outlet channels for the flow, a number of parallel filtering elements open from their ends, in which the infiltration occurs from inside the element out of the element through the jacket, and washing organs at different ends of the filtering elements, the organs connecting alternately to different ends of the filtering elements to act as discharge channels for the backflushing of elements generated by the pressure of the filtered flow.
US 3,318,452 relates to a filtering apparatus for removing contaminants from a liquid. The apparatus comprises a filter housing, which includes an inlet section and an outlet section, an inlet conduit in communication with the inlet section, an outlet conduit in communication with the outlet section, a plurality of spaced filter tubes disposed within the outlet section, the opposite ends of each of the tubes within the outlet section being open to the inlet section and backwash means movably supported in the the housing. The backwash means are movable into position to be in communication with opposite ends of one of the tubes at a particular time, the backwash means being movable so as to be in communication with the opposite open ends of different ones of the filter tubes in a sequential manner. [Citation List]

### [Patent Literature]

[PTL 1] JP-A-2001-170416

### [Summary of Invention]

### [Technical Problem]

However, the related-art backwash type filter noted above is difficult to sufficiently remove dirt or other deposits adhering to the "filter medium" constituting the filter element for the structural reason of the filter element even when backwashing is carried out. In this case, deposits remain on the filter medium and build up thereon, causing such a technical problem that the filtering flow amount decreases. According to the related-art backwash type filter discussed above, therefore, the filtering flow amount decreases (filtering ability lowers) with the use of the backwash type filter, in which condition the backwash type filter is difficult to filter fluid with high efficiency.

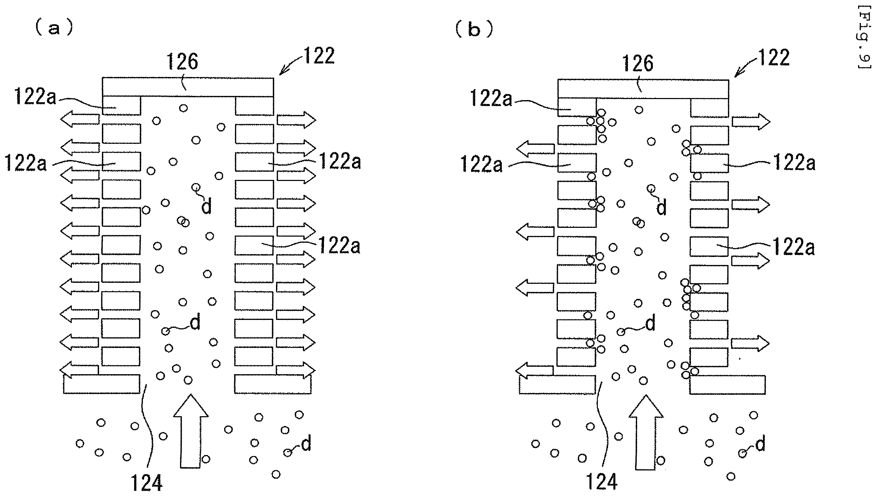

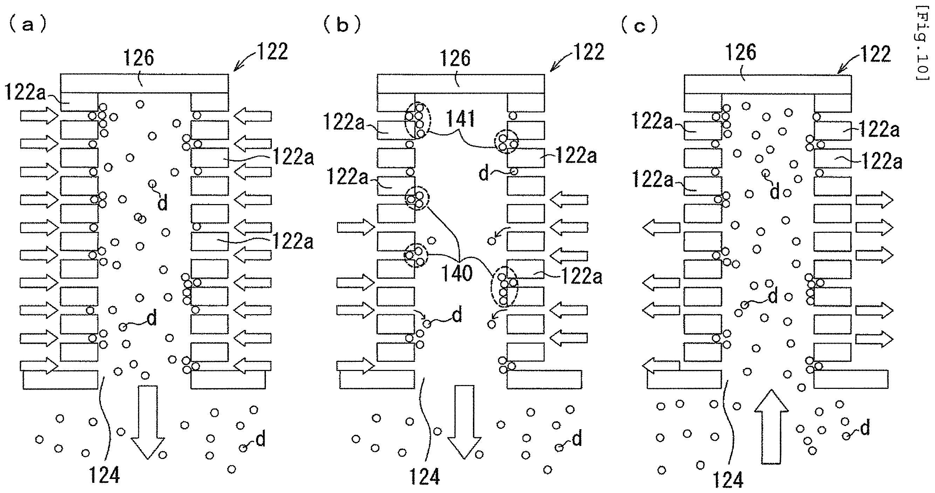

More specifically, as illustrated in FIGS. 9 (a) and 9(b), when fluid flows through the filter medium 122a constituting the filter element 122 for filtering fluid in the related-art backwash type filter, deposits d such as dirt adhere to the filter medium 122a one after another. By backwashing the filter element 122 to which dirt or the like adheres, the deposits d captured by the filter medium 122a of the filter element 122 are washed away as illustrated in FIG. 10(a).

However, the filter element 122 in the related art has such a structure which closes the end of the filter element 122 opposed to the filter inlet port 124 (on the sealing cap 126 side at the upper end of the filter medium 122a) . In this case, a large amount of water flow is not generated from the upper end of the filter medium 122a toward the filter inlet port 124 during backwashing. Therefore, according to the related art, the deposits d such as dirt adhering to the side surface of the filter medium 122a of the filter element 122 are difficult to be sufficiently washed away even when backwashing is executed (see reference number 140 in FIG. 10(b)).

Moreover, as the upper end of the filter element 122 is closed, the flow amount on the upper end side of the filter medium 122a is small during backwashing (i.e., the flow speed of the water flow on the upper end side of the filter medium 122a is low). Therefore, according to the related art, the deposits d adhering to the "upper end side of the filter medium 122a" positioned away from the filter inlet port 124 are also difficult to be sufficiently washed away by backwashing (see reference number 141 in FIG. 10(b)).

Accordingly, in the case of the related-art backwash type filter Z, the deposits d such as dirt build up on the filter medium 122a constituting the filter element 122 (on the side surface or the upper end side of the filter medium 122a) for the structural reason of the filter element 122 after the use of the backwash type filter Z for a certain period. In this case, the filtering flow amount decreases. It is possible to prevent lowering of the filtering ability of the related-art backwash type filter discussed above by frequently replacing the filter elements 122 with new ones. However, this method raises the running cost.

The invention has been developed to solve the aforementioned problems. It is an object of the invention to provide a filter element structure capable of preventing decrease in the filtering flow amount, and a backwash type filter which includes this filter element structure.

### [Solution to Problem]

The invention developed to achieve the aforementioned object is directed to a filter element structure attached to a backwash type filter and filtering fluid flowing within the filter, characterized by including a pair of one and the other filter elements, and a connection pipe connecting the one filter element and the other filter element. Each of the filter elements includes a filter medium formed into a hollow cylindrical shape having open ends on both sides, an upper cover covering the upper end of the filter medium, and an upper hole penetrating the upper cover. One end of the connection pipe is connected with the one upper hole, while the other end of the connection pipe is connected with the other upper hole.

It is preferable that the followings are satisfied. In filtering the fluid, the fluid is introduced through a filter inlet port formed at the lower end of the filter medium, whereby the fluid introduced into the filter element structure passes through the filter medium to be filtered. In backwashing the filter medium, a backwash arm provided on the backwash type filter is connected with the one filter inlet port, whereby the fluid introduced through the other filter inlet port passes through the connection pipe and flows into the cylindrical portion of the one filter medium, in which condition the fluid flowing outside the one filter element passes through the one filter medium and flows into the cylindrical portion of the one filter medium, whereupon the fluid flows from the one upper hole toward the one filter inlet port and washes away a deposit adhering to the one filter medium.

Accordingly, the filter element structure according to the invention adopts such a structure which includes a pair of the one and the other filter elements, and the connection pipe connecting the one filter element and the other filter element. When the one filter inlet port and the backwash arm are brought into a condition communicating with (connecting with) each other for backwashing the filter elements in this structure, fluid introduced through the other filter inlet port passes through the connection pipe and enters the cylindrical portion of the one filter medium. In this case, water flow is generated from the upper end of the one filter medium toward the one filter inlet port during backwashing, in which condition the deposit adhering to the side surface of the one filter medium can be washed away. Moreover, fluid flows from the connection pipe connected to the upper hole of the upper cover during backwashing. In this condition, large flow is also generated on the upper end side of the filter medium, whereby the deposit adhering to the "upper end side of the filter medium" away from the filter inlet port can be sufficiently washed away.

According to the invention, therefore, the cleaning effect (cleaning effect by backwashing) for the deposit adhering to the filter medium constituting the filter element increases higher than the cleaning effect of the related art noted above, wherefore decrease in the filtering flow amount caused by the use of the filter element is prevented.

According to the filter element structure of the invention, filtering similar to the related-art filtering is carried out by using fluid introduced through the filter inlet port at the time of filtering fluid.

According to the invention, the cleaning effect for the deposit adhering to the filter medium is improved by adopting the structure which connects "the connection pipe to the upper cover". Moreover, according to the invention, additional components such as an external power source and a control circuit are not required for operating the structure (connection pipe) noted above for improving the cleaning effect. Therefore, the filter element structure capable of preventing decrease in the filtering flow amount is provided without a great rise of the cost. It is preferable that the connection pipe is U-shaped. According to this structure, the fluid introduced through the other filter inlet port not communicating with the backwash arm smoothly flows through the connection pipe into the one filter element communicating with the backwash arm during backwashing of the filter element structure. Accordingly, the cleaning effect for the deposit adhering to the filter medium further improves.

The invention is applied to a backwash type filter provided with a substantially hollow and cylindrical housing containing a plurality of filter element structures, and sequentially cleaning filter elements while filtering fluid introduced from the outside. The backwash type filter is characterized by including a shelf board dividing the interior of the housing into two areas of an upper area and a lower area, a device inlet port formed in the lower part of the housing and introducing fluid as a filtering target into the lower area, a device outlet port formed in the upper part of the housing and discharging filtered fluid from the upper area, a rotation shaft disposed at the center of the housing and so formed as to freely rotate, and a backwash arm connected with the rotation shaft and acting in accordance with the rotation of the rotation shaft. Each of the filter element structures includes a pair of one and the other filter elements, and a connection pipe connecting the one filter element and the other filter element. Each of the filter elements includes a filter medium formed into a hollow cylindrical shape having open ends on both sides, an upper cover covering the upper end of the filter medium, and an upper hole penetrating the upper cover. The shelf board has a plurality of through holes with each of which the lower end of the corresponding filter element engages for fixation thereto so that the lower area of the housing communicates with the interior of the cylindrical portion of the filter medium. The backwash arm shifts with one end of the backwash arm contacting the lower end surface of the shelf board and connects with any one of the plural through holes to communicate with the filter element engaging with and fixed to the connected through hole. For the pair of the filter elements each of which does not communicate with the backwash arm, fluid introduced through the device inlet port flows via the corresponding through holes into the cylindrical portions of the filter media, whereby the introduced fluid passes through the filter media to be filtered, in which condition the filtered fluid is discharged through the device outlet port. For the pair of the filter elements the one of which communicates with the backwash arm, fluid introduced through the filter inlet port of the other filter element not communicating with the backwash arm passes through the connection pipe and flows into the cylindrical portion of the one filter medium, in which condition fluid flowing outside the one filter element passes through the one filter medium and enters the interior of the cylindrical portion of the one filter medium, whereupon fluid flows from the one upper hole toward the one filter inlet port to wash away a deposit adhering to the one filter medium.

According to the invention, therefore, the cleaning effect (cleaning effect by backwashing) for the deposit adhering to the filter medium of the filter element increases higher than the cleaning effect of the related art noted above. Accordingly, such a backwash type filter is provided which is capable of preventing decrease in the filtering flow amount caused by the use of the filter element.

### [Advantageous Effects of Invention]

Provided according to the invention are a filter element structure capable of preventing decrease in the filtering flow amount, and a backwash type filter including this filter element structure.

### [Brief Description of Drawings]

[FIG. 1] FIG. 1 schematically illustrates the general structure of a backwash type filter including filter element structures according to this embodiment.
[FIG. 2] FIG. 2 is a development elevation showing parts of a filter element according to this embodiment.
[FIG. 3] FIGS. 3(a) and 3(b) are plan views illustrating a positioning condition of connection pipes included in the backwash type filter according to this embodiment.
[FIG. 4] FIG. 4 schematically illustrates the general structure of the backwash type filter including the filter element structures during filtering according to this embodiment.
[FIG. 5] FIG. 5(a) schematically shows the flow direction of fluid during a filtering step performed by the filter element structure according to this embodiment, while FIG. 5(b) schematically shows the flow direction of fluid during a backwashing step performed by the filter element structure according to this embodiment.
[FIG. 6] FIGS. 6(a) and 6(b) schematically illustrate the filtering step performed by the filter element structure according to this embodiment.
[FIG. 7] FIGS. 7(a), 7(b) and 7(c) schematically illustrate the backwashing step performed by the filter element structure according to this embodiment.
[FIG. 8] FIG. 8 schematically illustrates a backwash type filter including filter elements in related art.
[FIG. 9] FIGS. 9(a) and 9(b) schematically illustrate a filtering step performed by the filter element in the related art.
[FIG. 10] FIGS. 10(a), 10(b) and 10(c) schematically illustrate a backwashing step performed by the filter element in the related art.

### [Description of Embodiments]

A filter element structure according to an embodiment of the invention and a backwash type filter including this filter element structure are hereinafter described with reference to the drawings.

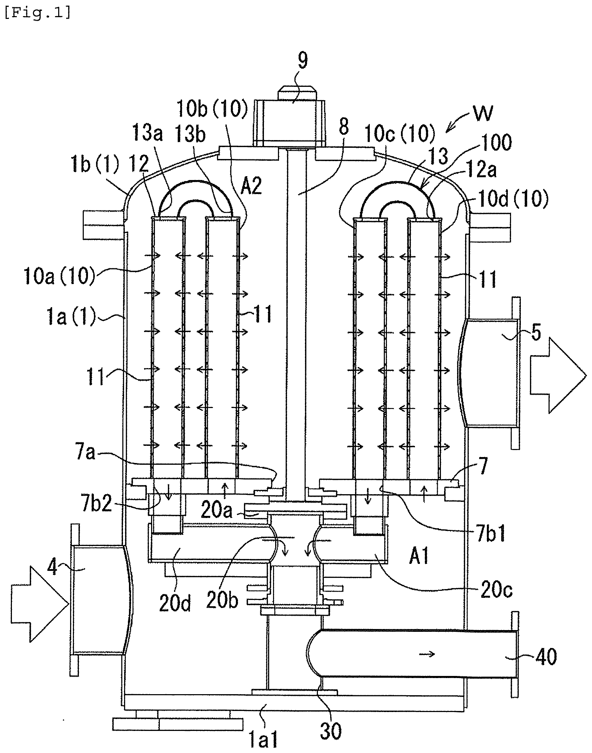

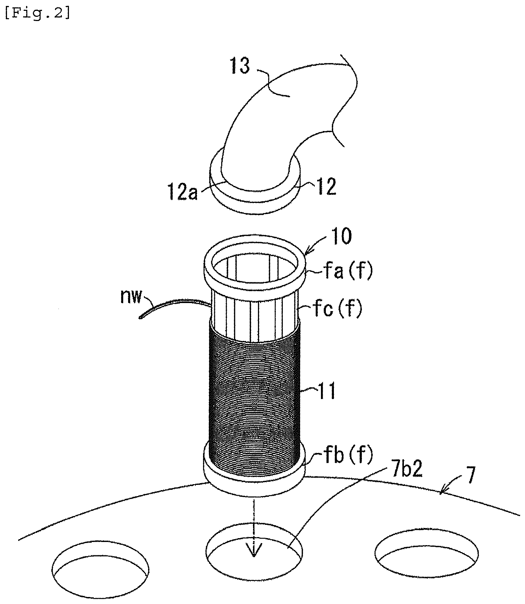

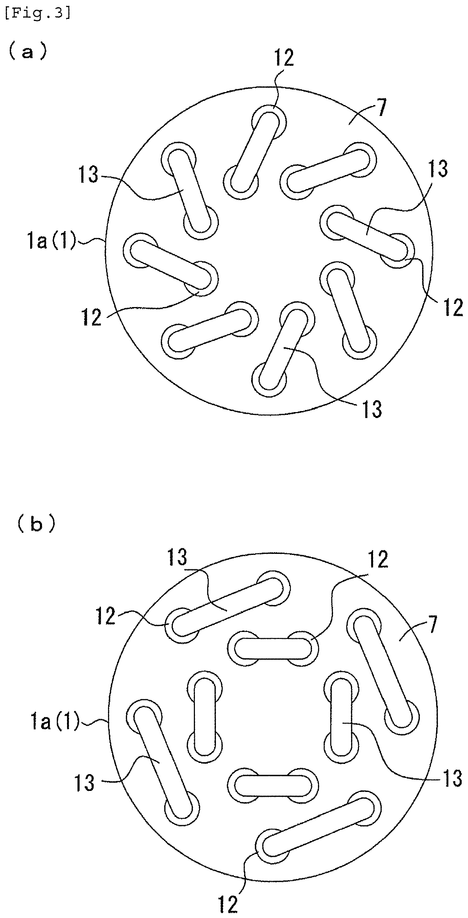

Initially, the structure of the backwash type filter including the filter element structure according to this embodiment is explained with reference to FIGS. 1 through 3. FIG. 1 schematically illustrates the general structure of the backwash type filter including the filter element structure according to this embodiment. FIG. 2 is a development elevation showing parts of a filter element according to this embodiment. FIG. 3 is a plan view illustrating a positioning condition of connection pipes included in the backwash type filter according to this embodiment.

As illustrated in FIG. 1, a backwash type filter W according to this embodiment includes a hollow and cylindrical housing 1 which houses a plurality of filter elements 10, and is so structured as to sequentially clean the filter elements 10 while filtering fluid introduced from the outside of the housing 1. The structure of the backwash type filter W according to this embodiment is now sequentially discussed. In the description of this embodiment characterized by the structure of the filter elements 10, the structure of the filter elements 10 is explained in detail, while the constitution of other parts is only briefly touched upon.

The housing 1 includes a hollow and cylindrical main body 1a having an opened upper end and a bottom 1a1, and a dome-shaped cover 1b closing the upper end of the main body 1a. A shelf board 7 provided inside the housing 1 divides the interior of the housing 1 into an entrance area (lower area) A1 and an exit area (upper area) A2. A device inlet port 4 through which fluid is introduced into the entrance area A1 is formed in the side surface of the main body 1a on the lower end side thereof. A device outlet port 5 through which filtered fluid is discharged from the exit area A2 is formed in the side surface of the main body 1a on the upper end side.

The shelf board 7 is disk-shaped, and has a through hole 7a through which a rotation shaft 8 is rotatably inserted. The through hole 7a is formed at the center of the shelf board 7. The shelf board 7 further has a plurality of through holes 7b1 and 7b2. The through holes 7b1 and 7b2 are formed on concentric circles around the through hole 7a (i.e. , the plural through holes 7b1 and 7b2 are formed at predetermined intervals while spaced away from each other) . More specifically, the through holes 7b1 and 7b2 are formed on two concentric circles (inner circle and outer circle) having different radii, respectively. The lower ends of the filter elements 10 air-tightly engage with the corresponding through holes 7b1 and 7b2 to be fixed thereto, whereby the plural filter elements 10 are supported on and fixed to the shelf board 7. According to this structure, the entrance area A1 of the housing 1 communicates with the interiors of the cylindrical portions of the filter elements 10 (filter media 11). Fluid introduced into the housing 1 is allowed to flow from the entrance area A1 (or the exit area A2) to the exit area A2 (or the entrance area A1) only by passing through the interiors of the cylindrical portions of the filter elements 10 (filter media 11).

The eight filter elements 10 engage with the through holes 7b1 formed on the inner circle of the shelf board 7 to be fixed to the through holes 7b1, while the eight filter elements 10 engage with the through holes 7b2 formed on the outer circle of the shelf board 7 to be fixed to the through holes 7b2.

The rotation shaft 8 extending from the top of the cover 1b toward the shelf board 7 is provided at the center of the housing 1. One end (upper end) of the rotation shaft 8 is connected with a motor 9 attached to the upper end of the cover 1 so that the rotation shaft 8 can rotate in accordance with the drive of the motor 9. The other end (lower end) of the rotation shaft 8 is inserted through the through hole 7a of the shelf board 7, and projected to reach the entrance area A1. The motor 9 is controlled by a not-shown control circuit, and driven under the control of the control circuit.

A backwash arm (backwash pipe) 20 is connected with the lower end of the rotation shaft 8 extended to the entrance area A1 of the housing 1. The backwash arm 20 is formed integrally with a base 20a fixed to the lower end of the rotation shaft 8 such that the upper end surface of the backwash arm 20 rotates together with the rotation shaft 8 while water-tightly sealing the lower surface of the shelf board 7.

More specifically, the backwash arm 20 has the base 20a, a vertical pipe 20b connected with the base 20a, and two L-shaped pipes 20c and 20d connected with the side surface of the vertical pipe 20b. The upper end of the vertical pipe 20b is sealed by the base 20a, while the lower end of the vertical pipe 20b rotatably engages with a discharge pipe 30 communicating with a backwash solvent discharge port 40.

The one end of the L-shaped pipe 20c is connected with the side surface of the vertical pipe 20b to communicate with the vertical pipe 20, while the upper end surface of the L-shaped pipe 20c formed at the other end thereof contacts the lower surface of the shelf board 7. The length of the L-shaped pipe 20c is designed such that the upper end surface of the L-shaped pipe 20c rotates along the plural through holes 7b1 formed in the shelf board 7.

The one end of the L-shaped pipe 20d is connected with the side surface of the vertical pipe 20b to communicate with the vertical pipe 20b, while the upper end surface of the L-shaped pipe 20d formed at the other end thereof contacts the lower surface of the shelf board 7. The length of the L-shaped pipe 20d is designed such that the upper end surface of the L-shaped pipe 20d rotates along the plural through holes 7b2 formed in the shelf board 7.

The backwash arm 20 acts in accordance with the rotation of the rotation shaft 8 rotated by the motor 9. The upper end surfaces of the L-shaped pipes 20c and 20d are brought into tight contact with the lower surface of the shelf board 7, and disposed at positions coinciding with the through holes 7b1 and 7b2 engaging and fixing the lower ends of the filter elements 10. According to this structure, the backwash arm 20 intermittently (or successively) rotates with the upper end surfaces of the L-shaped pipes 20c and 20d sealing the shelf board 7, and sequentially communicates with filter inlet ports 19 formed at the lower ends of the filter elements 10.

More specifically, the L-shaped pipe 20c acts by the drive of the motor 9 under the control of the not-shown control circuit, allowing the upper end surface of the L-shaped pipe 20c to connect with any one of the plural through holes 7b1 formed in the shelf board 7. Accordingly, via the through hole 7b1 to which the L-shaped pipe 20c is connected, the L-shaped pipe 20c connects with the filter element 10 engaging with and fixed to this through hole 7b1 (i.e., the L-shaped pipe 20c communicates with the interior of the cylindrical portion of the filter medium 11 formed in a hollow and cylindrical shape).

On the other hand, the L-shaped pipe 20d acts by the drive of the motor 9 under the control of the control circuit, allowing the upper end surface of the L-shaped pipe 20d to connect with any one of the plural through holes 7b2 formed in the shelf board 7. Accordingly, via the through hole 7b2 to which the L-shaped pipe 20d is connected, the L-shaped pipe 20d connects with the filter element 10 engaging with and fixed to this through hole 7b2 (i.e. , the L-shaped pipe 20d communicates with the interior of the cylindrical portion of the filter medium 11 formed in a hollow and cylindrical shape).

It is preferable that the through holes 7b1 and 7b2 and the L-shaped pipes 20c and 20d are appropriately disposed in such positions that the L-shaped pipes 20c and 20d do not simultaneously connect with one and the other of the paired filter elements 10, respectively, connected via a connection pipe 13 described below.

Each of the filter elements 10 includes the filter medium 11 formed in a hollow and cylindrical shape and having open ends on both sides, a plate-shaped upper cover 12 covering the upper end of the filter medium 11, and upper holes 12a penetrating the upper cover 12.

The specific structure of the filter medium 11 is not particularly limited as long as the filter medium 11 is capable of filtering fluid when fluid passes through the filter medium 11 and capable of executing backwashing. For example, the filter medium 11 may be a component formed by a metal net or notch wire wound around a cylindrical frame (filtering frame) into a hollow and cylindrical shape. Discussed herein is an example of the filter medium 11 formed by a notch wire wound around a frame, based on which example the details of the respective structures of the filter element 10 are described. FIG. 2 is a development elevation showing the parts of the filter element according to this embodiment.

According to the example shown in FIG. 2, the filter medium 11 constituting the filter element 10 is a cylindrical component formed by a notch wire nw in a spiral shape wound around a frame f made of metal such as stainless steel. The frame f is constituted by a circular upper ring member fa having open ends on both sides, a circular lower ring member fb having open ends on both sides, and bar-shaped wire support members fc disposed between the upper ring member fa and the lower ring member fb. More specifically, the frame f has the upper ring member fa and the lower ring member fb disposed with a predetermined distance left therebetween (disposed opposed to each other), and the plural wire support members fc arranged into a circumferential shape between the upper ring member fa and the lower ring member fb while spaced apart from each other by a predetermined distance. Both ends of each of the wire support members fc are fixed to the upper ring member fa and the lower ring member fb.

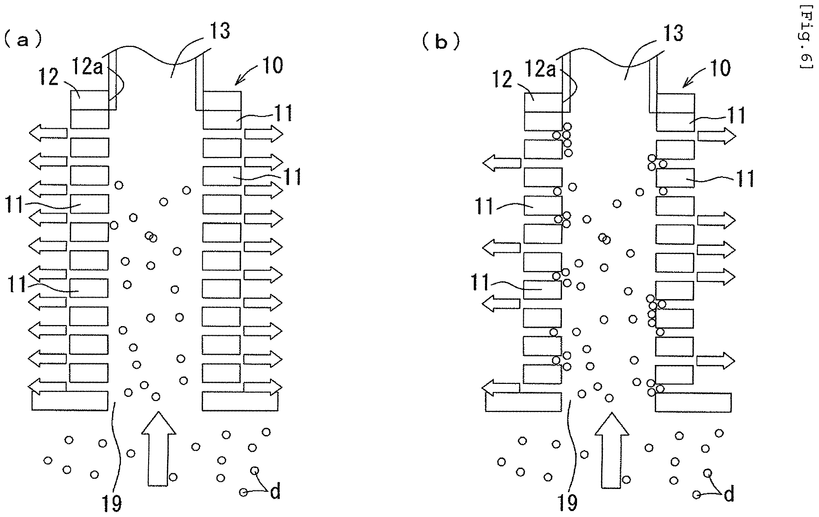

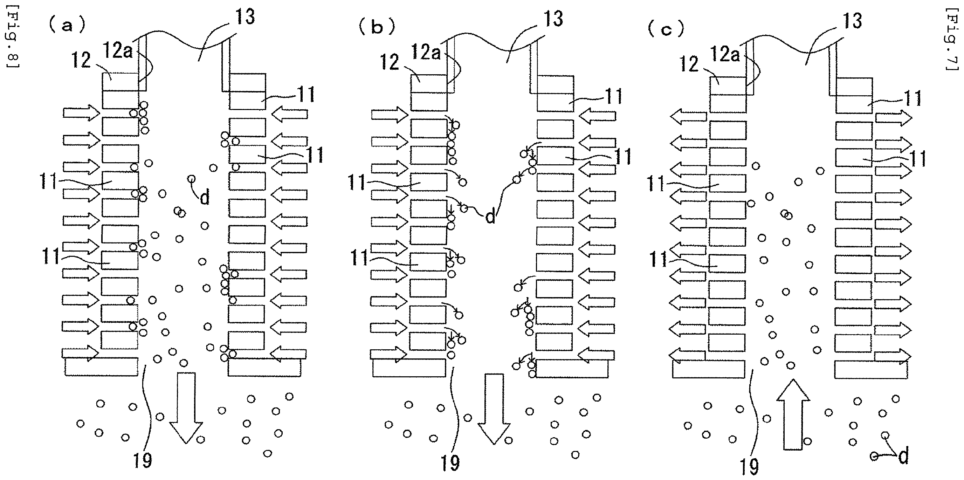

The notch wire nw is wound in a spiral shape around the wire support members fc arranged along the circumferential shape of the frame f while brought into contact with the outer surfaces of the wire support members fc. The spiral shapes of the notch wire nw are laminated in layers to form the cylindrical filter medium 11. The lower end of the filter medium 11 is opened to form the filter inlet port 19 through which fluid passes (see FIGS. 6 and 7).

The upper cover 12 covering the upper end of the filter medium 11 is substantially disk-shaped, and made of metal such as stainless steel.

More specifically, the upper cover 12 is so sized as to have a diameter substantially equivalent to the outside diameter of the upper ring member fa, and is fixed to the upper surface of the upper ring member fa. According to this structure, the upper end of the filter medium 11 formed in a cylindrical shape is covered by the upper cover 12. The upper cover 12 has the upper hole 12a penetrating the upper and lower surfaces of the upper cover 12. The connection pipe 13 engages with the upper hole 12a.

The connection pipe 13 is U-shaped, for example, and connected with a pair of the filter elements 10. More specifically, an end (one end) 13a of the connection pipe 13 engages with the upper hole 12a of a filter element 10a corresponding to the one filter element 10, while an end (the other end) 13b of the connection pipe 13 engages with the upper hole 12a of a filter element 10b corresponding to the other filter element 10. The connection pipe 13 is made of metal such as stainless steel.

As illustrated in FIG. 3, the connection pipe 13 is provided for each pair of the filter elements 10. For example, each of the connection pipes 13 shown in FIG. 3 (a) is disposed in such a manner as to connect one of the filter elements 10 fixed to the inner circle of the shelf board 7 and the filter element 10 fixed to the outer circle of the shelf board 7 and located at the position adjacent to the corresponding filter element 10 on the inner circle and allow these filter elements 10 to communicate with each other. Alternatively, as illustrated in FIG. 3(b), each of the connection pipes 13 may be disposed in such a manner as to connect one of the filter elements 10 fixed to the inner circle of the shelf board 7 and the filter element 10 fixed similarly to the inner circle and located at the position adjacent to the corresponding filter element 10 on the inner circle and allow these filter elements 10 to communicate with each other, and in such a manner as to connect one of the filter elements 10 provided outside and the filter element 10 fixed similarly to the inner circle and located at the position adjacent to the corresponding filter element 10 outside and allow these filter elements 10 to communicate with each other. Each pair of the filter elements 10 connected via the connection pipe 13 is referred to as a filter element structure 100.

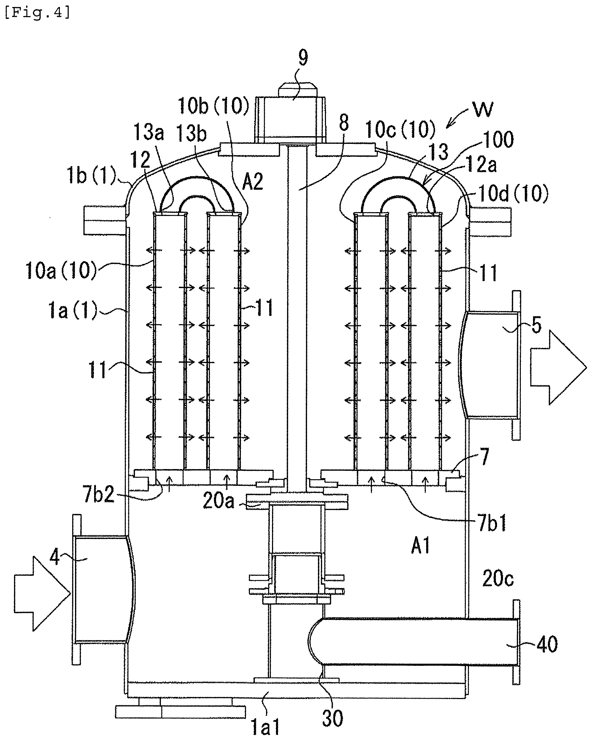

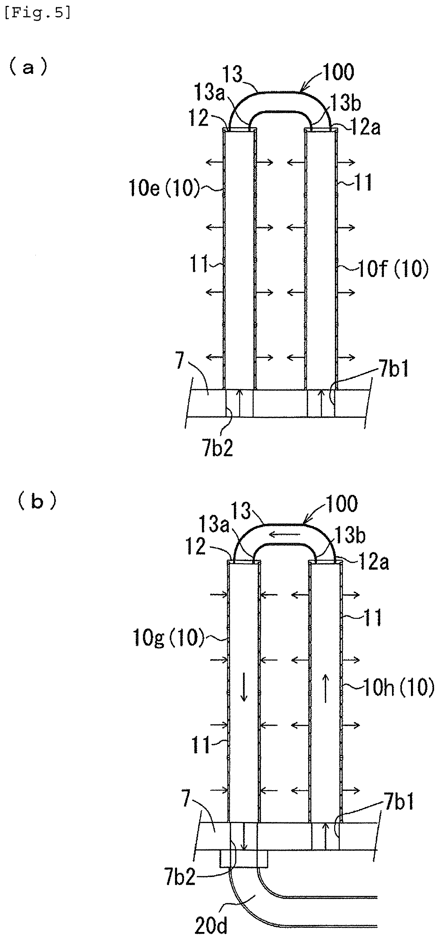

The operation of the filter element structure 100 according to this embodiment is now explained. Initially, the operation of the filter element structure 100 executed for filtering is discussed with reference to FIGS. 4 through 6 referred to above. FIG. 4 schematically illustrates the general structure of a backwash type filter including the filter element structures 100 according to this embodiment in the condition of filtering. FIG. 5(a) schematically illustrates the flow direction of fluid during a filtering step carried out by the filter element structure 100 according to this embodiment. FIG. 6 schematically illustrates the filtering step carried out by the filter element structure 100 according to this embodiment, wherein: FIG. 6(a) schematically illustrates the filter element structure 100 and the fluid immediately after the start of filtering; and FIG. 6(b) schematically illustrates the filter element structure 100 and the fluid in the condition after an elapse of a predetermined time from the start of filtering. FIGS. 5 and 6 are simplified for convenience in explanation.

The filter element structure 100 is so configured as to carry out filtering when the backwash arm 20 is not connected with the filter inlet port 19 formed at the lower end of the filter element structure 100. According to the example shown in FIGS. 4 and 5(a), the filter element structure 100 is not connected with the backwash arm 20, in which condition the filter element structure 100 executes filtering of the fluid.

More specifically, a pair of filter elements 10e and 10f constituting the filter element structure 100 are so configured as to allow fluid having entered through the device inlet port 4 (fluid containing filtering target (deposits) d such as dirt) to flow from the respective filter inlet ports 19 into the cylindrical portions of the filter media 11 in the condition where the filter inlet ports 19 and the backwash arm 20 are not connected with each other (see FIG. 6(a)). When the fluid flows from the respective filter inlet ports 19 into the cylindrical portions of the respective filter media 11, the fluid thus introduced flows out into the connection pipes 13 connected with the upper holes 12a of the respective upper covers 12. Then, in the filtering step, fluid enters through the respective filter inlet ports 19 and fills the interiors of the connection pipes 13, whereby introduction of fluid into the connection pipes 13 stops . As a result, the upper holes 12a of the respective upper covers 12 are brought into a condition similar to the water-tightly closed condition.

The fluid introduced into the inner cylindrical portions of the respective filter media 11 passes from the inside of the respective filter media 11 to the outside thereof to flow out of the pair of the filter elements 10e and 10f. During this period, the filtering target d such as dirt contained in the fluid is captured by the filter media 11, whereby the filtering target d is removed from the fluid having passed through the pair of the filter elements 10e and 10f (see FIG. 6(b)). The fluid filtered while passing through the pair of the filter elements 10e and 10f flows through the exit area A2, and is discharged from the device outlet port 5.

According to this embodiment, the upper hole 12a is formed in each of the upper covers 12 of the pair of the filter elements 10e and 10f as discussed above. However, each of the upper holes 12a is brought into a condition similar to the water-tightly closed condition during the filtering step. Accordingly, filtering performance similar to that of the related-art filter element is provided.

Next, the operation of the filter element structure 100 during backwashing is explained with reference to FIGS. 5 and 7 referred to above. FIG. 5(b) schematically illustrates the flow direction of fluid during a backwashing step performed by the filter element structure 100 according to this embodiment. FIG. 7 schematically illustrates the backwashing step of the filter element structure 100 according to this embodiment, wherein: FIG. 7(a) schematically illustrates the filter element structure 100 and the fluid immediately after the start of backwashing; FIG. 7 (b) schematically illustrates the filter element structure 100 and the fluid in the condition after an elapse of a predetermined time from the start of backwashing; and FIG. 7(c) schematically illustrates the condition where filtering is restarted after dirt is washed away by backwashing. FIG. 7 is simplified for convenience in explanation similarly to FIG. 5.

The filter element structure 100 is so configured as to carry out backwashing for the filter element structure 100 when the backwash arm 20 is connected with the filter inlet port 19 formed at the lower end of a filter element 10g of paired filter elements 10g and 10h to constituting the filter element structure 100. According to the example shown in FIG. 5(b), the pair of the filter element 10g and the filter element 10h execute backwashing for the filter medium 11 connected with the backwash arm 20. FIGS. 7(a) and 7(b) do not show the backwash arm 20 communicating with the filter inlet port 19.

When the backwash arm 20 is connected with the filter inlet port 19 formed at the lower end of the one filter element 10g of the paired filter elements 10g and 10h via the through hole 7b2 of the shelf board 7, the corresponding filter inlet port 19 is closed by the backwash arm 20. In this condition, introduction of fluid into the filter inlet port 19 stops. When the flow of fluid into the filter inlet port 19 stops, fluid flowing outside the filter element 10g (fluid flowing in the exit area A2) passes through the filter medium 11 constituting the side surface of the filter element 10g, and flows into the cylindrical portion of the filter medium 11 (see FIG. 5(b)). Accordingly, the deposits d (filtering target) captured between the materials of the filter medium 11 are washed away.

Moreover, the fluid flowing in the entrance area A1 enters through the filter inlet port 19 of the filter element 10h, and the fluid thus introduced flows out toward the connection pipe 13 connected with the upper hole 12a of the upper cover 12. Then, the fluid passes inside the connection pipe 13, and flows out into the filter element 10g connected with the filter element 10h via the connection pipe 13. As a consequence, a large flow amount of fluid is generated from the upper hole 12a of the upper cover 12 to which the connection pipe 13 is connected toward the filter inlet port 19, and washes away the deposits (filtering target) d adhering between the materials of the filter medium 11 in the upper part of the filter medium 11 of the filter element 10g.

The filter medium 11 has fine meshes. The water pressure inside the connection pipe 13 is lower than the water pressure outside the filter element 10h. In this condition, substantially no fluid introduced through the filter inlet port 19 of the filter element 10h flows from the inside of the filter medium 11 to the outside of the filter element 10h.

After completion of the backwashing step shown in FIGS. 7(a) and 7(b), the deposits (filtering target) d captured by the filter medium 11 of the filter element 10 are washed away as illustrated in FIG. 7 (c) . Accordingly, when filtering of fluid is again executed using this filter element 10, the desired filtering ability is maintained during filtering.

According to this embodiment, the backwashing step performed when the backwash arm 20 is connected with the filter element 10g has been discussed. When the backwash arm 20 is connected with the filter element 10h, the fluid introduced through the filter inlet port 19 of the filter element 10g passes inside the connection pipe 13, and flows out into the filter element 10h connected with the filter element 10g via the connection pipe 13. As a consequence, the fluid flows from the upper hole 12a of the upper cover 12 to which the connection pipe 13 is connected toward the filter inlet port 19, and washes away the deposits (filtering target) d adhering between the materials in the upper part of the filter medium 11 of the filter element 10h.

As discussed above, the filter element structure 100 according to this embodiment adopts such a structure which connects a pair of the filter elements 10 via the connection pipe 13.

According to the structure in this embodiment, backwashing for the pair of the filter elements 10g and 10h is performed by the following method. When the backwash arm 20 is connected to the filter inlet port 19 of the one filter element 10g, fluid introduced through the filter inlet port 19 of the other filter element 10h passes through the connection pipe 13, and generates a large amount of flow from the upper end of the filter medium 11 toward the filter inlet port 19 during backwashing. Therefore, according to this embodiment, large flow is also generated on the upper end side of the filter medium 11, whereby the deposits (filtering target) d adhering to the "upper end side of the filter medium 11" away from the filter inlet port 19 can be sufficiently washed away. Moreover, according to this embodiment, the deposits (filtering target) d adhering to the side surface of the filter medium 11 can also be washed away.

According to this embodiment, therefore, the cleaning effect (cleaning effect by backwashing) for the deposits d adhering to the filter element 10 increases higher than the cleaning effect of the related art noted above, and prevents decrease in the filtering flow amount caused by the use of the filter element 10.

According to this embodiment, decrease in the filtering flow amount is prevented by adopting the structure connecting the pair of the filter elements 10 via the "connection pipe 13" (i.e., structure which reduces the number of parts and does not require complicated control). According to this embodiment, therefore, additional components such as an external power source and a control circuit are not required for operating the structure noted above for improving the cleaning effect (connection pipe 13). Therefore, the pair of the filter elements 10 capable of preventing decrease in the filtering flow amount are provided without a great rise of the cost.

According to this embodiment, the pair of the filter elements 10 are connected via the connection pipe 13. In this structure, the upper hole 12a of the upper cover 12 can be brought into a condition similar to the closed condition of the upper hole 12a when backwashing is not carried out. Accordingly, this structure prevents flow of fluid to the outside of the filter elements 10 without passing through the filter media 11 during the filtering step.

As discussed above, the pair of the filter elements 10 and the backwash type filter W capable of preventing decrease in the filtering flow amount are provided according to this embodiment.

The invention is not limited to the embodiment described herein, but may be practiced otherwise in various ways without departing from the scope of the features of the invention.

The connection pipe 13 which is U-shaped in this embodiment may have any other shapes as long as fluid can flow without interruption caused by the shapes of the connection pipe 13.

### [Reference Signs List]

- W: backwash type filter
- 1: housing
- 1a: main body (housing)
- 1a1: bottom (housing)
- 1b: cover (housing)
- 4: device inlet port (housing)
- 5: device outlet port (housing)

- 7: shelf board
- 7a: through hole
- 7b1, 7b2: through hole
- 8: rotation shaft
- 9: motor

- 10: filter element
- 11: filter medium (filter element)
- 12: upper cover (filter element)
- 12a: upper hole (filter element)
- 13: connection pipe (filter element)
- 19: filter inlet port (filter element)
- 100: filter element structure

- f: frame (filter element)
- fa: upper ring member (frame (filter element))
- fb: lower ring member (frame (filter element))
- fc: wire support member (frame (filter element))

- 20 ···: backwash arm
- 20a: base (backwash arm)
- 20b: vertical pipe (backwash arm)
- 20c, 20d: L-shaped pipe (backwash arm)

- 30: discharge pipe
- 40: backwash solvent discharge port

## Claims

1. A backwash type filter provided with a substantially hollow and cylindrical housing (1) containing a plurality of filter element structures, and capable of sequentially cleaning said filter element structures while filtering fluid introduced into the housing,
**characterized in that**
the backwash type filter includes
a shelf board (7) dividing the interior of the housing into two areas of an upper area and a lower area,
a device inlet port (4) formed in the lower part of the housing and introducing fluid as a filtering target into the lower area,
a device outlet port (5) formed in the upper part of the housing and discharging filtered fluid from the upper area,
a rotation shaft (8) disposed at the center of the housing and so formed as to freely rotate, and
a backwash arm (20) connected with the rotation shaft and acting in accordance with the rotation of the rotation shaft,
each of the filter element structures includes a pair of first and the second filter elements (10), and a connection pipe (13) connecting the first filter element to the second filter element,
each of the filter elements includes a filter medium formed into a hollow cylindrical shape having open upper and lower ends on both sides, an upper cover (12) covering the upper end of the filter medium, and an upper hole (12a) penetrating the upper cover,
one end of the connection pipe (13) is connected with the upper hole of the first filter element, while the other end of the connection pipe is connected with the upper hole of the second filter element,
the shelf board (7) has a plurality of through holes with each of which the lower open end of the corresponding filter element engages for fixation thereto so that the lower area of the housing communicates with the interior of the cylindrical portion of the filter medium,
the backwash arm (20) shifts with one end of the backwash arm contacting the lower end surface of the shelf board along with the rotation of the rotation shaft, and, by being connected with any one of the plural through holes, communicates with any one of the pair of the filter elements engaging with and fixed to the connected through hole,
for the pair of the filter elements each of which does not communicate with the backwash arm, are adapted such that fluid introduced through the device inlet port flows via the corresponding through holes into the cylindrical portions of the filter media, whereby the introduced fluid passes through the filter media to be filtered, in which condition the filtered fluid is discharged through the device outlet port, and
for the pair of the filter elements the one of which communicates with the backwash arm, is adapted such that fluid introduced through the lower open end of the other filter element not communicating with the backwash arm passes through the connection pipe and flows into the cylindrical portion of the one filter medium, in which condition fluid flowing outside the one filter element passes through the one filter medium and enters the interior of the cylindrical portion of the one filter medium, whereupon fluid flows from the one upper hole toward the one filter lower open end to wash away a deposit adhering to the one filter medium.

## Patentansprüche

1. Filter vom Rückspültyp mit einem im Wesentlichen hohlen und zylindrischen Gehäuse (1), das eine Anzahl von Filterelementstrukturen enthält, und der in der Lage ist, sequenziell die Filterelementstrukturen zu reinigen, während Filterfluid in das Gehäuse eingebracht wird, **dadurch gekennzeichnet,**
**dass** der Filter vom Rückspültyp aufweist
einen Regalboden (7), der das Innere des Gehäuses in zwei Bereiche eines oberen Bereichs und eines unteren Bereichs unterteilt,
eine Vorrichtungs-Einlassöffnung (4), die in dem unteren Teil des Gehäuses ausgebildet ist und Fluid als Filterungsobjekt in den unteren Bereich einbringt,
eine Vorrichtungs-Auslassöffnung (5), die in dem oberen Teil des Gehäuses ausgebildet ist und gefiltertes Fluid aus dem oberen Bereich abführt,
eine Drehwelle (8), die in der Mitte des Gehäuses angeordnet ist und so ausgebildet ist, dass sie sich frei dreht, und
einen Rückspülarm (20), der mit der Drehwelle verbunden ist und in Übereinstimmung mit der Drehung der Drehwelle wirkt,
wobei jede der Filterelementstrukturen ein Paar aus einem ersten und einem zweiten Filterelement (10) und eine Verbindungsleitung (13) aufweist, die das erste Filterelement und das zweite Filterelement verbindet,
wobei jedes der Filterelemente ein Filtermedium aufweist, das in einer hohlen zylindrischen Form mit einem offenen oberen und einem unteren Ende an beiden Seiten ausgebildet ist, mit einer oberen Abdeckung (12), die das obere Ende des Filtermediums abdeckt, und einem oberen Loch (12a), das die obere Abdeckung durchdringt,
wobei ein Ende der Verbindungsleitung (13) mit dem oberen Loch des ersten Filterelements verbunden ist, während das andere Ende der Verbindungsleitung mit dem oberen Loch des zweiten Filterelements verbunden ist,
wobei der Regalboden (7) eine Anzahl von Durchgangslöchern aufweist mit denen das untere offene Ende des entsprechenden Filterelements zur Befestigung daran in Eingriff steht, sodass der untere Bereich des Gehäuses mit dem Inneren des zylindrischen Teils des Filtermediums kommuniziert,
wobei der Rückspülarm (20) sich mit der Drehung der Drehwelle verschiebt, wobei ein Ende des Rückspülarms die untere Endfläche des Regalbodens kontaktiert und, durch die Verbindung mit irgend einem der Anzahl von Durchgangslöchern, mit irgend einem des Paares von Filterelementen kommuniziert, das mit dem verbundenen Durchgangsloch in Eingriff steht und daran fixiert ist,
wobei für das Paar der Filterelemente, von denen jedes nicht mit dem Rückspülarm kommuniziert, es so ausgebildet ist, dass Fluid, das durch die Vorrichtungs-Einlassöffnung eingebracht wird, über die entsprechenden Durchgangslöcher in die zylindrischen Teile der Filtermedien strömt, wodurch das eingebrachte Fluid durch die Filtermedien passiert, um gefiltert zu werden, wobei in diesem Zustand das gefilterte Fluid durch die Vorrichtungs-Auslassöffnung abgegeben wird, und
wobei für das Paar der Filterelemente das eine, das nicht mit dem Rückspülarm kommuniziert, so ausgebildet ist, dass Fluid, das durch das untere offene Ende des Filterelements eingebracht wird, das nicht mit dem Rückspülarm kommuniziert, durch die Verbindungsleitung passiert und in den zylindrischen Teil des einen Filtermediums strömt, wobei in diesem Zustand Fluid, das außerhalb des einen Filterelements strömt, durch das eine Filtermedium passiert und in das Innere des zylindrischen Teils des einen Filtermediums eintritt, wodurch Fluid von dem einen oberen Loch zu dem einen unteren offenen Filterende strömt, um Ablagerungen, die an dem Filtermedium anhaften, wegzuspülen.

## Revendications

1. Filtre de type à lavage à contre-courant doté d'un carter essentiellement creux et cylindrique (1) contenant une pluralité de structures à élément filtrant et capable de nettoyer séquentiellement lesdites structures à élément filtrant tout en filtrant le fluide introduit dans le carter, **caractérisé en ce que** le filtre de type à lavage à contre-courant comprend :
une tablette (7) divisant l'intérieur du carter en deux zones, une zone supérieure et une zone inférieure,
un orifice d'admission du dispositif (4) formé dans la partie inférieure du carter et introduisant du fluide comme cible de filtrage dans la zone inférieure,
un orifice de sortie du dispositif (5) formé dans la partie supérieure du carter et déchargeant du fluide filtré provenant de la partie supérieure,
un axe de rotation (8) disposé au centre du carter et formé de manière à tourner librement, et
un bras de lavage à contre-courant (20) raccordé à l'axe de rotation et agissant suivant la rotation de l'axe de rotation,
chacune des structures à élément filtrant comprend une paire de premier et deuxième éléments filtrants (10) et un tube de raccordement (13) raccordant le premier élément filtrant au deuxième élément filtrant,
chacun des éléments filtrants comprend un support filtrant formé dans une forme cylindrique creuse ayant des extrémités supérieure et inférieure ouvertes des deux côtés, un couvercle supérieur (12) recouvrant l'extrémité supérieure du support filtrant, et un trou supérieur (12a) pénétrant dans le couvercle supérieur,
une extrémité du tube de raccordement (13) est raccordée au trou supérieur du premier élément filtrant, tandis que l'autre extrémité du tube de raccordement est raccordée au trou supérieur du deuxième élément filtrant,
la tablette (7) a une pluralité de trous traversants avec chacun desquels l'extrémité ouverte inférieure de l'élément filtrant correspondant s'engage pour s'y fixer de sorte que la zone inférieure du carter communique avec l'intérieur de la portion cylindrique du support filtrant,
le bras de lavage à contre-courant (20) se décale avec une extrémité du bras de lavage à contre-courant en établissant un contact avec la surface d'extrémité inférieure de la tablette simultanément à la rotation de l'axe de rotation, et, en étant raccordé à l'un quelconque des multiples trous traversants, communique avec l'un quelconque des éléments filtrants de la paire d'éléments filtrants s'engageant avec et fixés au trou traversant raccordé,
pour la paire d'éléments filtrants, dont chacun des éléments filtrats ne communique pas avec le bras de lavage à contre-courant, elle est adaptée de telle sorte que le fluide introduit à travers l'orifice d'admission du dispositif s'écoule via les trous traversants correspondants dans les portions cylindriques des supports filtrants, ce par quoi le fluide introduit traverse les supports filtrants à filtrer, dans cet état le fluide filtré est déchargé par l'orifice de sortie du dispositif, et
pour la paire d'éléments filtrants, dont l'un des éléments filtrants communique avec le bras de lavage à contre-courant, elle est adaptée de telle sorte que le fluide introduit par l'extrémité ouverte inférieure de l'autre élément filtrant ne communiquant pas avec le bras de lavage à contre-courant passe par le tube de raccordement et s'écoule dans la portion cylindrique du un support filtrant, dans cet état le fluide s'écoulant à l'extérieur du un élément filtrant traverse le un support filtrant et pénètre à l'intérieur de la portion cylindrique du un support filtrant, après quoi le fluide s'écoule du un trou supérieur vers la une extrémité ouverte inférieure du filtre pour faire partir au lavage un dépôt adhérant au un support filtrant.
